# EUROPEAN PATENT APPLICATION

(11) **EP 4 083 125 A1**
(43) Date of publication of application: **02.11.2022**
(21) Application number: 20905589.6
(22) Date of filing: 22.12.2020
(51) Int. Cl.: C08J 9/26, H01M 50/409

(54) **SEPARATOR FOR NONAQUEOUS ELECTROLYTE SECONDARY BATTERIES, NONAQUEOUS ELECTROLYTE SECONDARY BATTERY, AND METHOD FOR PRODUCING SEPARATOR FOR NONAQUEOUS ELECTROLYTE SECONDARY BATTERIES**

(30) Priority: 27.12.2019 JP 2019237742
(71) Applicant: Panasonic Intellectual Property Management Co., Ltd., Osaka-shi, Osaka 540-6207 (JP)
(72) Inventor: HARA, Kohei, Osaka-shi, Osaka 540-6207 (JP); MATSUI, Tooru, Osaka-shi, Osaka 540-6207 (JP); SUZUKI, Hirotetsu, Osaka-shi, Osaka 540-6207 (JP); SAKATA, Motohiro, Osaka-shi, Osaka 540-6207 (JP)
(74) Representative: Novagraaf International SA
(86) International application number: PCT/JP2020/047807
(87) International publication number: WO 2021/132203

(57) **Abstract**

This separator for nonaqueous electrolyte secondary batteries contains a polymer compound and a solid electrolyte, and has a pore volume of 0.06 cm³/g or less.

## Description

### TECHNICAL FIELD

The present disclosure relates to a separator for a non-aqueous electrolyte secondary battery, a non-aqueous electrolyte secondary battery, and a method for producing a separator for a non-aqueous electrolyte secondary battery.

### BACKGROUND ART

A separator for a non-aqueous electrolyte secondary battery may contain an inorganic filler for the purposes of an enhancement in heat resistance and an enhancement in ion permeability. Patent Literature 1 discloses a separator that includes an inorganic filler and a water-soluble polymer having a predetermined structure and that is thus excellent in shape stability without being contracted even at a high temperature.

### CITATION LIST

### PATENT LITERATURE

PATENT LITERATURE 1: International Publication No. WO 2018/079474

### SUMMARY

A separator for a non-aqueous electrolyte secondary battery have varied characteristics depending on the pore size, and the characteristics are often in a trade-off relationship. A separator having large pores having a size of several hundred nanometers has a feature of high rate of permeation of an electrolyte solution; however, internal short circuit easily occurs due to easily-growing dendrite through such pores. In contrast, a separator having small pores in size can suppress internal short circuit; however, the rate of permeation of an electrolyte solution is low.

A separator for a non-aqueous electrolyte secondary battery of one aspect of the present disclosure includes a polymer compound and a solid electrolyte, in which a pore volume is 0.06 cm³/g or less.

A non-aqueous electrolyte secondary battery of one aspect of the present disclosure comprises the separator for a non-aqueous electrolyte secondary battery, a positive electrode, a negative electrode, and a non-aqueous electrolyte.

A method for producing a separator for a non-aqueous electrolyte secondary battery of one aspect of the present disclosure includes a slurry production step of mixing a dissolution liquid obtained by dissolving a polymer compound in an ionic liquid, with a solid electrolyte, to produce a slurry, a gelling step of coating a surface of a substrate with the slurry to produce a coating film and replacing the ionic liquid with an organic poor solvent having a lower solubility of the polymer compound than the ionic liquid, to thereby produce a gelled film in which the coating film is gelled, and a drying step of drying the gelled film to obtain a composite film.

According to the separator for a non-aqueous electrolyte secondary battery of one aspect of the present disclosure, it is possible to not only suppress internal short, but also enhance the rate of permeation of an electrolyte solution.

### BRIEF DESCRIPTION OF DRAWING

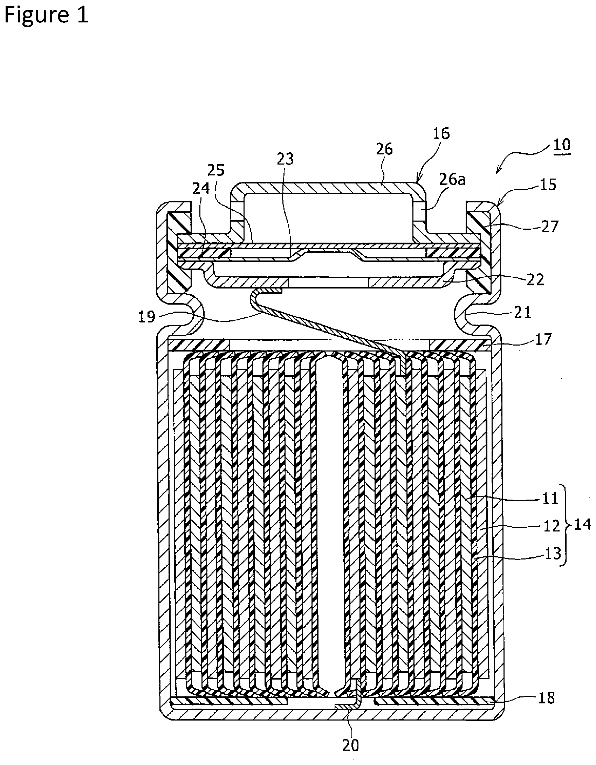

FIG. 1 is a longitudinal sectional view of a non-aqueous electrolyte secondary battery of an exemplary embodiment.

### DESCRIPTION OF EMBODIMENTS

Hereinafter, exemplary embodiments of a separator for a non-aqueous electrolyte secondary battery according to the present disclosure, and a non-aqueous electrolyte secondary battery using the separator for a non-aqueous electrolyte secondary battery will be described in detail. Hereinafter, a cylindrical battery will be exemplified in which a wound-type electrode assembly is housed in a cylindrical exterior can having a closed-end, but an exterior body is not limited to such a cylindrical exterior can and may be, for example, a rectangular exterior can or an exterior body configured from a laminate sheet including a metal layer and a resin layer. The electrode assembly may also be a stacked electrode assembly in which a plurality of positive electrodes and a plurality of negative electrodes are alternately stacked with a separator being interposed therebetween.

FIG. 1 is a longitudinal sectional view of a cylindrical-type secondary battery 10 of an exemplary embodiment. In the secondary battery 10 shown in FIG. 1, an electrode assembly 14 and a non-aqueous electrolyte (not shown) are housed in an exterior body 15. The electrode assembly 14 has a wound-type structure formed by winding a positive electrode 11 and a negative electrode 12 with a separator 13 being interposed therebetween. Hereinafter, there will be described under the assumption that a sealing assembly 16 side is "upper" and a bottom side of the exterior body 15 is "lower", for the purpose of illustration.

An opening end of the exterior body 15 is blocked by a sealing assembly 16, and thus the interior of the secondary battery 10 is tightly sealed. Respective insulating plates 17 and 18 are disposed on and under the electrode assembly 14. A positive electrode lead 19 passes through a though-hole in the insulating plate 17 and extends upward, and is welded to the lower surface of a filter 22, which is the bottom board of the sealing assembly 16. In the secondary battery 10, a cap 26, which is the top board of the sealing assembly 16 and electrically connected to the filter 22, serves as a positive electrode terminal. On the other hand, a negative electrode lead 20 passes through a though-hole in the insulating plate 18 and extends toward the bottom of the exterior body 15, and is welded to the inner surface of the bottom of the exterior body 15. In the secondary battery 10, the exterior body 15 serves as a negative electrode terminal. When the negative electrode lead 20 is placed on a terminal portion, the negative electrode lead 20 passes on the outside of the insulating plate 18 and extends toward the bottom of the exterior body 15, and is welded to the inner surface of the bottom of the exterior body 15.

The exterior body 15 is, for example, a cylindrical metal container having a closed-end. A gasket 27 is disposed between the exterior body 15 and the sealing assembly 16 to ensure that the interior of the secondary battery 10 is tightly sealed. The exterior body 15 has, for example, a grooved portion 21 which is formed by pressing a lateral surface from outside and which supports the sealing assembly 16. The grooved portion 21 is preferably formed annularly along the circumferential direction of the exterior body 15, and the upper surface thereof supports the sealing assembly 16 via the gasket 27.

The sealing assembly 16 has the filter 22, a lower vent member 23, an insulating member 24, an upper vent member 25, and the cap 26 which are stacked in the listed order from the electrode assembly 14 side. Each of the members constituting the sealing assembly 16 has, for example, a disk or ring shape, and the members other than the insulating member 24 are electrically connected to each other. The lower vent member 23 and the upper vent member 25 are connected to each other at respective middle portions and the insulating member 24 is interposed between respective circumferences. If the inner pressure of the battery increases by abnormal heat generation, for example, the lower vent member 23 ruptures to thereby cause the upper vent member 25 to swell toward the cap 26 and separate from the lower vent member 23, thereby breaking the electrical connection between the members. If the inner pressure further increases, the upper vent member 25 ruptures to discharge gas through an opening 26a of the cap 26.

Hereinafter, the positive electrode 11, the negative electrode 12, the separator 13 and the non-aqueous electrolyte constituting the electrode assembly 14, in particular, the separator 13 will be described in detail.

### [Positive Electrode]

The positive electrode 11 has a positive electrode core and a positive electrode mixture layer disposed on a surface of the positive electrode core. The positive electrode core used here can be, for example, foil of a metal, such as aluminum, which is stable in the electric potential range of the positive electrode 11, or a film in which such a metal is disposed on an outer layer. The thickness of the positive electrode core is, for example, 10 µm to 30 µm. The positive electrode mixture layer preferably includes a positive electrode active material, a binder and a conductive agent, and is preferably disposed on both surfaces of the positive electrode core, except for a portion to which the positive electrode lead 19 is connected. The positive electrode 11 can be produced by, for example, coating each surface of the positive electrode core with a positive electrode mixture slurry including a positive electrode active material, a binder, a conductive agent and the like to form each coating, drying such each coating, and then compressing the resultant to thereby form the positive electrode mixture layer on both surfaces of the positive electrode core.

Examples of the positive electrode active material included in the positive electrode mixture layer can include lithium transition metal oxide containing a transition metal element such as Co, Mn or Ni. Examples of the lithium transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). These may be used singly or a plurality thereof may be mixed and used. The positive electrode active material preferably includes a lithium/nickel complex oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3) from the viewpoint that the capacity of the non-aqueous electrolyte secondary battery can be increased.

Examples of the conductive agent included in the positive electrode mixture layer can include carbon materials such as carbon black (CB), acetylene black (AB), Ketjenblack, a carbon nanotube, a carbon nanofiber, and graphite. These may be used singly or may be used in combinations of two or more thereof.

Examples of the binder included in the positive electrode mixture layer can include fluoro resins such as polytetrafluoroethylene (PTFE) and poly(vinylidene fluoride) (PVdF), polyacrylonitrile (PAN), polyimide resins, acrylic resins, and polyolefin resins. Such a resin may be used in combination with, for example, a cellulose derivative such as carboxymethyl cellulose (CMC) or a salt thereof, or polyethylene oxide (PEO). These may be used singly or may be used in combinations of two or more thereof.

### [Negative Electrode]

The negative electrode 12 has a negative electrode core and a negative electrode mixture layer disposed on a surface of the negative electrode core. The negative electrode core here used can be, for example, foil of a metal, such as copper, which is stable in the electric potential range of the negative electrode 12, or a film in which such a metal is disposed on an outer layer. The thickness of the negative electrode core is, for example, 5 µm to 15 µm. The negative electrode mixture layer preferably includes a negative electrode active material and a binder, and is preferably disposed on, for example, both surfaces of the negative electrode core, except for a portion to which the negative electrode lead 20 is connected. The negative electrode 12 can be produced by, for example, coating each surface of the negative electrode core with a negative electrode mixture slurry including a negative electrode active material, a binder, and the like to form each coating, drying such each coating, and then compressing the resultant to thereby form the negative electrode mixture layer on both surfaces of the negative electrode core. A conductive agent may also be added to the negative electrode mixture slurry. The conductive agent can make a conductive path uniform.

The binder included in the negative electrode mixture layer, here used, may be, for example, a fluoro resin such as PTFE or PVdF, PAN, polyimide, an acrylic resin, or polyolefin, as in the case of the positive electrode 11, and is preferably styrene-butadiene rubber (SBR). Such a resin may be used in combination with, for example, CMC or a salt thereof, poly(acrylic acid) (PAA) or a salt thereof, or poly(vinyl alcohol) (PVA). Examples of the conductive agent included in the negative electrode mixture layer can include carbon black, acetylene black, Ketjenblack, a carbon nanotube, and a carbon nanofiber.

### [Separator]

The separator 13 includes a polymer compound and a solid electrolyte. In other words, the separator 13 includes a polymer compound as a matrix and a solid electrolyte as an inorganic filler. The pore volume of the separator 13 is 0.06 cm³/g or less and is preferably 0.05 cm³/g or less. This enables internal short to be suppressed with ionic conductivity being ensured between the positive electrode and the negative electrode. The pore volume can be here measured with, for example, a commercially available measurement apparatus such as BELSORP-miniX manufactured by MicrotracBEL Corp., by use of a nitrogen gas.

The thickness of the separator 13 is preferably 0.2 µm or more and 10 µm or less, more preferably 0.4 µm or more and 1 µm or less. A thickness of the separator 13 of less than 0.2 µm results in insufficient strength. A thickness of the separator 13 of more than 10 µm causes an increase in a volume of the separator, the volume not contributing to charge and discharge in an internal space of a battery, and results in a reduction in density of such a battery.

The mass ratio between the polymer compound and the solid electrolyte in the separator 13 is preferably 100:1 to 100:100000, further preferably 100:1 to 100:10000, particularly preferably 100:1 to 100:400. The separator 13 may include an additive other than the polymer compound and the solid electrolyte as long as the objects of the present disclosure are not impaired.

Examples of the polymer compound included in the separator 13 can include olefin resins such as polyethylene and polypropylene, cellulose, and cellulose derivatives. The polymer compound is preferably cellulose. Cellulose is inexpensive and is dissolved in an ionic liquid, and thus easily allows the separator 13 to be thinner by a production method described below.

Examples of the solid electrolyte included in the separator 13 can include Li₇La₃Zr₂O₁₂ (LLZ) having a garnet-type structure, Li₁₊ₓAlₓTi₂₋ₓP₃O₁₂ (LATP) having a NASICON-type structure, La_{2/3-x}LiₓTiO₃ (LLT) having a perovskite-type structure, and lithium ion-containing polyethylene oxide (Li⁺·PEO). LLZ, LATP, and LLT here each include one in which some of elements contained in each of the above general formulae is substituted with other addition element.

The solid electrolyte is preferably LATP from the viewpoint of ionic conductive rate. LATP here used can be, for example, LICGC (trademark) represented by Li_{1+x+y}AlₓTi₂₋ₓSi_{y}P_{3-y}O₁₂, manufactured by OHARA Inc.

The solid electrolyte may be a powder. The average particle size is, for example, 0.1 µm or more and 10 µm or less, and is preferably 0.4 µm or more and 1 µm or less. The average particle size means a particle size at which the accumulation of frequency reaches 50% from a smaller particle size in a particle size distribution on a volume basis, and is also referred to as "median size". The particle size distribution of the solid electrolyte can be measured with water as a dispersion medium by use of a laser diffraction particle size distribution measurement apparatus (for example, MT3000II manufactured by MicrotracBEL Corp.).

The separator 13 may be such that lithium ions can be transferred in the separator 13 by bringing a plurality of such solid electrolytes into contact with not only one surface of the separator, but also other surface thereof in a continuous manner, or may be such that the thickness of the separator 13 is equal to or less than the average particle size of the solid electrolyte to thereby allow one particle of the solid electrolyte to pass through the separator. The thickness of the separator is preferably equal to or less than the average particle size of the solid electrolyte from the viewpoint of ease of transfer of lithium ions.

A heat-resistant layer including a heat-resistant material may be formed on a surface of the separator 13. Examples of the heat-resistant material can include polyamide resins such as aliphatic polyamide and aromatic polyamide (aramid), and polyimide resins such as polyamideimide and polyimide.

Hereinafter, an exemplary embodiment of a method for producing the separator 13 will be described.

First, in a slurry production step, a slurry is produced by mixing a dissolution liquid obtained by dissolving a polymer compound in an ionic liquid, with a solid electrolyte. The ionic liquid is a salt including an anion and a cation, and is a liquid at room temperature. The ionic liquid for cellulose dissolution, here used, can be a commercially available ionic liquid for cellulose dissolution. The ionic liquid here used can be, for example, an alkylimidazolium salt, and examples of the type of the salt include chloride, acetate, and phosphate.

The mass ratio between the ionic liquid and the polymer compound in the slurry is, for example, 100:0.2 to 100:15. Such a range can allow the separator 13 to be produced by dissolving the polymer compound in the ionic liquid and forming a film. The solid electrolyte can be added in an amount of, for example, 1 part by mass to 100000 parts by mass based on 100 parts by mass of the polymer compound.

Next, in a gelling step, a surface of a substrate is coated with the slurry to produce a coating film, and the ionic liquid is replaced with an organic poor solvent having a lower solubility of the polymer compound than the ionic liquid, to thereby produce a gelled film in which the coating film is gelled. The substrate to be coated with slurry, here used, can be, for example, a flat substrate made of a resin, glass or a metal. Examples of the organic poor solvent with which the ionic liquid is to be replaced can include ethyl acetate. The ionic liquid may be replaced with ethyl acetate through acetone by immersing the substrate on which the coating film is formed, in acetone and then ethyl acetate.

In a drying step, the gelled film is dried to obtain a composite film. Although the gelled film is contracted by drying, the above production method can suppress particularly contraction of the polymer compound in the gelled film and thus can suppress the occurrence of voids between the polymer compound and the solid electrolyte. The composite film obtained may be used as the separator 13 as it is, or the composite film may be subjected to a post-step.

### [Non-Aqueous Electrolyte]

The non-aqueous electrolyte includes a non-aqueous solvent and an electrolyte salt dissolved in the non-aqueous solvent. The non-aqueous electrolyte is not limited to a liquid electrolyte (electrolyte solution), and may be a solid electrolyte using a gel polymer or the like. Examples of the non-aqueous solvent that can be used include esters, ethers, nitriles such as acetonitrile, amides such as dimethylformamide, and any mixed solvent of two or more thereof. The non-aqueous solvent may contain a halogen-substituted product formed by replacing at least a portion of hydrogen of any of the above solvents with a halogen atom such as fluorine.

Examples of the esters include cyclic carbonate esters such as ethylene carbonate (EC), propylene carbonate (PC), and butylene carbonate, chain carbonate esters such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylate esters such as γ-butyrolactone and γ-valerolactone, and chain carboxylate esters such as methyl acetate, ethyl acetate, propyl acetate, methyl propionate (MP), ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, di phenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

Preferable examples of the halogen-substituted product for use include a fluorinated cyclic carbonate ester such as fluoroethylene carbonate (FEC), a fluorinated chain carbonate ester, and a fluorinated chain carboxylate ester such as methyl fluoropropionate (FMP).

The electrolyte salt is preferably a lithium salt. Examples of the lithium salt include LiBF₄, LiClO₄, LiPF₆, LiAsF₆, LiSbF₆, LiAlCl4, LiSCN, LiCF₃SO₃, LiCF₃CO₂, Li(P(C₂O₄)F₄), LiPF₆₋ₓ(CₙF₂ₙ₊ᵢ)ₓ(where 1 < x < 6, and n is 1 or 2), LiB₁₀Cl₁₀, LiCl, LiBr, LiI, chloroborane lithium, lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {where 1 and m are integers of 1 or more}. These lithium salts may be used singly or a plurality thereof may be mixed and used. Among these, LiPF₆ is preferably used in view of ionic conductivity, electrochemical stability, and other properties. The concentration of the lithium salt is preferably 0.8 to 1.8 mol per liter of the solvent.

Hereinafter, the present disclosure will be further described with reference to Examples, but the present disclosure is not intended to be limited to such Examples.

### <Example>

### [Production of Separator]

Cellulose having a mass-average molecular weight of about 300000 was dissolved in 1-ethyl-3-methylimidazolium diethylphosphate as an ionic liquid for cellulose dissolution. A slurry was obtained by adding 2 parts by mass of a LICGC powder (manufactured by OHARA Inc., particle size 1 µm) to 1 part by mass of the cellulose and uniformly mixing the resultant. A film was formed on a glass plate according to a cast method, the ionic liquid was removed by acetone, furthermore acetone was replaced with ethyl acetate, and thereafter the resultant was air-dried to produce a separator. The separator produced was subjected to measurement of an adsorption isotherm by nitrogen adsorption with BELSORP-miniX manufactured by MicrotracBEL Corp., and thus the pore volume was determined according to a BJH method, and was 0.047 cm³/g. The thickness of the separator was 60 µm.

### [Production of Positive Electrode]

LiNi_{0.5}Co_{0.2}Mn_{0.3}O₂ was used as a positive electrode active material. Mixed were the positive electrode active material, acetylene black, and poly(vinylidene fluoride) (PVdF) at a solid mass ratio of 100:3:1, and an appropriate amount of N-methyl-2-pyrrolidone (NMP) was added thereto and then the resultant was kneaded to prepare a positive electrode mixture slurry. Both sides of a positive electrode core made of aluminum foil was coated with the positive electrode mixture slurry, and the resultant coatings were dried and then rolled by a roller and cut to a predetermined electrode size to thereby produce a positive electrode in which a positive electrode mixture layer was formed on each of both sides of the positive electrode core. An exposed portion in which a surface of the positive electrode core was exposed was provided on a portion of the positive electrode.

### [Production of Negative Electrode]

A Li metal as a negative electrode active material was pushed and fixed to a Ni mesh, and cut to a predetermined electrode size to thereby obtain a negative electrode. An exposed portion in which a surface of the negative electrode core was exposed was provided on a portion of the negative electrode.

### [Preparation of Electrolyte Solution]

An electrolyte solution (non-aqueous electrolyte) was prepared in which lithium hexafluorophosphate (LiPF₆) was dissolved at a concentration of 1.0 mol/L in a mixed solvent obtained by mixing fluoroethylene carbonate (FEC) and methyl 3,3,3-trifluoropropionate (FMP) at a volume ratio of 2:8.

### [Production of Test Cell]

An aluminum lead and a nickel lead were respectively attached to the exposed portion of the positive electrode and the exposed portion of the negative electrode, and the positive electrode and the negative electrode were oppositely disposed with the separator produced being interposed therebetween, to thereby produce an electrode assembly. The electrode assembly was housed in an exterior body configured by an aluminum laminate sheet, the non-aqueous electrolyte was injected thereinto, and the opening of the exterior body was sealed, to thereby obtain a test cell.

### [Evaluation of Rate of Permeation of Electrolyte Solution]

The separator produced above was clamped by a hyper sheet gasket and fixed to the center of an H-type cell. LiTFSI/DME (molar ratio LiTFSI:DME = 1:10) was placed in a left chamber of the H-type cell, LiTFSI/FEC + FMP (molar ratio LITFSI:FMP = 1:10) was placed in a right chamber thereof, the liquid in the right chamber after 5 hours was recovered, and the concentration of DME was quantitatively analyzed by GC-MS. It was indicated that, as the concentration of DME in the right chamber was higher, the rate of permeation of the electrolyte solution was higher.

### [Evaluation of Suppression of Short]

The test cell produced above was charged to a battery voltage of 4.7 V at a constant current (CC) of 0.01 C under an environmental temperature of 25°C, and whether or not a reduction in voltage occurred during the charge was confirmed. A case of no reduction in voltage during the charge was determined to cause no occurrence of any internal short and evaluated as "Good", and a case of a reduction in voltage during the charge was determined to cause the occurrence of internal short and evaluated as "Poor".

### <Comparative Example>

The same manner and evaluation as in Example 1 were performed except that a film of the slurry in Example 1 was formed on a glass plate according to a cast method, the ionic liquid was removed by ultrapure water, and the resultant was air-dried to produce a separator.

Table 1 shows the evaluation results of Example and Comparative Example. Table 1 also shows the thickness and the pore volume of the separator, together with the evaluation results.

**[Table 1]**

| | Separator | | Evaluation results | |
|---|---|---|---|---|
| | Thickness [µm] | Pore volume [m³/g] | Concentration of DME (Rate of permeation of electrolyte solution) | Suppression of short |
| Example | 60 | 0.047 | >17mol% (Detection limit or more) | Good |
| Comparative Example | 60 | 0.064 | 0.063mol% | Poor |

It was found as shown in Table 1 that the separator of Example had the effect of suppression of short as compared with the separator of Comparative Examples. The separator of Example was also high in rate of permeation of the electrolyte solution as compared with the separator of Comparative Example. It was presumed that ethyl acetate was adopted as the solvent to result in an increase of nano-sized pores in the separator and on the other hand a reduction in pore volume was largely affected by a decrease of voids between the solid electrolyte and the matrix, rather than affected by such an increase of nano-sized pores.

### REFERENCE SIGNS LIST

10 secondary battery
11 positive electrode
12 negative electrode
13 separator
14 electrode assembly
15 exterior body
16 sealing assembly
17, 18 insulating plate
19 positive electrode lead
20 negative electrode lead
21 grooved portion
22 filter
23 lower vent member
24 insulating member
25 upper vent member
26 cap
26a opening
27 gasket

## Claims

1. A separator for a non-aqueous electrolyte secondary battery, including:
a polymer compound; and
a solid electrolyte, wherein
a pore volume is 0.06 cm³/g or less.

2. The separator for a non-aqueous electrolyte secondary battery according to claim 1, wherein a thickness is 0.2 µm or more and 10 µm or less.

3. The separator for a non-aqueous electrolyte secondary battery according to claim 1 or 2, wherein the polymer compound is cellulose.

4. The separator for a non-aqueous electrolyte secondary battery according to any one of claims 1 to 3, wherein the solid electrolyte is LATP.

5. A non-aqueous electrolyte secondary battery, comprising:
the separator for a non-aqueous electrolyte secondary battery according to any one of claims 1 to 4;
a positive electrode;
a negative electrode; and
a non-aqueous electrolyte.

6. A method for producing a separator for a non-aqueous electrolyte secondary battery, including:
a slurry production step of mixing a dissolution liquid obtained by dissolving a polymer compound in an ionic liquid, with a solid electrolyte, to produce a slurry;
a gelling step of coating a surface of a substrate with the slurry to produce a coating film and replacing the ionic liquid with an organic poor solvent having a lower solubility of the polymer compound than the ionic liquid, to thereby produce a gelled film in which the coating film is gelled; and
a drying step of drying the gelled film to obtain a composite film.
